Europäisches Patentamt

European Patent Office

Office européen des brevets

(11) Publication number: **0 159 111**
**B1**

## (12) EUROPEAN PATENT SPECIFICATION

(45) Date of publication of patent specification: **04.01.89**

(21) Application number: **85301096.5**

(22) Date of filing: **19.02.85**

(51) Int. Cl.⁴: **H 04 N 5/78,** H 04 N 5/94, G 11 B 5/09

(54) Method and apparatus for storing/retrieving digital data on video tape.

(30) Priority: **13.03.84 US 589181**

(43) Date of publication of application:
**23.10.85 Bulletin 85/43**

(45) Publication of the grant of the patent:
**04.01.89 Bulletin 89/01**

(84) Designated Contracting States:
**DE GB**

(56) References cited:
**EP-A-0 074 039**
**DE-A-2 846 939**
**DE-A-3 144 191**
**US-A-4 393 414**

(73) Proprietor: **HAZELTINE CORPORATION**
**500 Commack Road**
**Commack New York 11725 (US)**

(72) Inventor: **Kerbel, Sheldon J.**
**1676 Buckingham Road**
**Merrick New York 11566 (US)**

(74) Representative: **Wood, Anthony Charles et al**
**Urquhart-Dykes & Lord 91 Wimpole Street**
**London W1M 8AH (GB)**

## Description

This invention relates to methods of storing information on a video tape and methods of recovering information from a video tape.

Image storage systems employing video cassette recorders (which term conventionally includes video cassette players) are well known in the prior art, such as US-A-4527193. However, such systems generally store frequency-modulated analog data at a very slow data rate and do not include the type of error correction which is necessary for high digital data rate transfer.

EP-A-0074039 describes a method of storing information on a video tape using a video recorder by providing an input signal to the recorder for recording onto the tape, the input signal representing the information, said method comprising:

providing to the recorder as part of the input signal a series of first vertical synchronization pulses;

providing to the recorder as part of the input signal data encoded in "A" data periods between each of the successive first vertical synchronization pulses, each said data period having "B" bytes of data, wherein A and B are positive integers; and

providing to the recorder as part of the input signal a resynchronization pulse before the beginning of each said data period.

An object of the present invention is to make it possible to provide a method of accurately and quickly storing and recovering digital information stored in a digitally represented signal format on a video cassette tape using a video cassette recorder.

The invention is characterized in that said method is applied to the storage of digital information in a digitally represented signal format on a video cassette tape using a video cassette recorder; and

the step of providing data encoded in the A data periods comprises providing said data as a digitally encoded signal in which the average value of the magnitude of said digitally encoded signal, between each of the successive first vertical synchronization pulses, is substantially constant.

EP-A-0074039 also describes a method of recovering information from a video tape using a video player by detecting an output signal from the player as the player reads the tape, the output signal representing the information, said method comprising:

detecting as part of the output signal a series of first vertical synchronization pulses;

detecting as part of the output signal data encoded in "A" data periods between each of the successive first vertical synchronization pulses, each said data period having "B" bytes of data, wherein A and B are positive integers;

detecting as part of the output signal a resynchronization pulse before the beginning of each said data period.

The present invention is also characterized in that said method is applied to the recovery of digital information stored in a digitally represented signal format on a video cassette tape using a video cassette recorder;

identifying media drop-outs and parts of the output signal which are the result of said media drop-outs;

writing, except during said signal parts resulting from identified media drop-outs, the digital data encoded in the first A/2 data periods into a buffer; and

writing, except during said signal parts resulting from identified media drop-outs, the digital data encoded in the last A/2 data periods into the buffer at the same buffer locations as correspond to the data written in from the first A/2 data periods.

An embodiment of the invention will now be described, by way of example, with reference to the accompanying drawings, in which:

Figure 1 is a diagram showing the signal format of a digital data signal which is recorded on a video cassette tape according to the invention.

Figure 2 is a diagram showing the 32 bytes of each data period.

Figure 3 is a diagram illustrating various 8-bit bytes.

Figures 4a and 4b are illustrations of the maximum period of digital data without transitions.

Figure 5 is a functional block diagram illustrating apparatus for carrying out error correction in a method according to the invention.

Figure 6 is a diagram illustrating error correction storage in a method according to the invention.

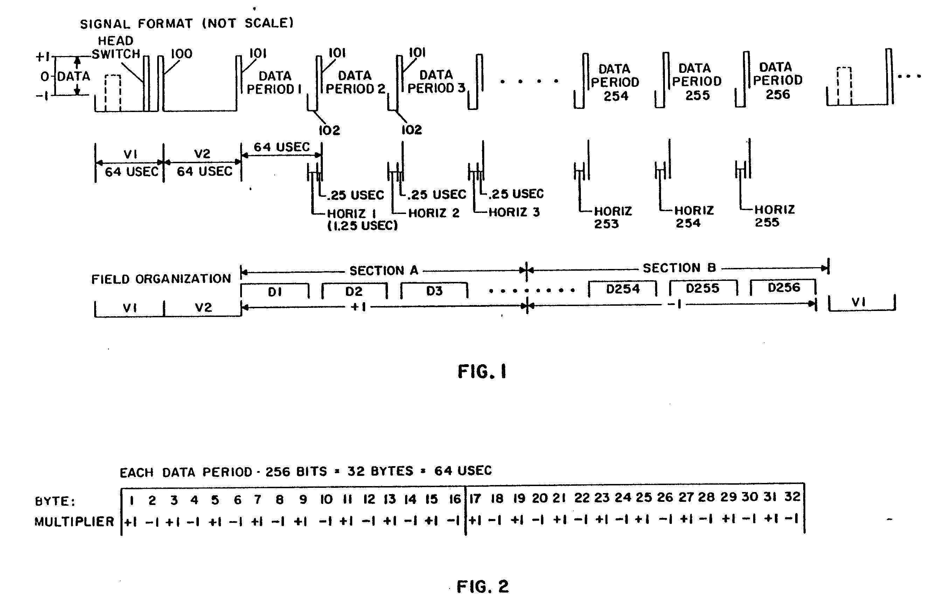

Figure 1 illustrates the signal format for a signal used in accordance with the invention. The lower portion of Figure 1 illustrates the field organization of the signal. Generally, the signal format must take the form of a standard black-and-white video signal so that it can be recorded on a video cassette tape by a video cassette recorder. A signal such as illustrated in Figure 1 would be provided to the input of a video cassette recorder. Because the signal format is similar to an NTSC black-and-white format, the recorder would be able to record the signal onto a video cassette tape. Furthermore, the recorder would be able to read the signal in the playback mode from a video cassette tape recorded with such a signal and would provide the signal at its output.

The basic format of the signal is a vertical synchronization pulse followed by 256 data periods. Each of the data periods is preceded by a resynchronization pulse. In particular, as illustrated in Figure 1, the preferred signal format includes a first vertical synchronization pulse V1 followed by a second vertical synchronization pulse V2 which is then followed by 256 data periods. First vertical sync pulse V1 and second vertical sync pulse V2 are separated by a resynchronization pulse 100. The purpose and function of resync pulses will be discussed in greater detail below. The data periods illustrated in Figure 1 are numbered from 1 to 256. However, the actual number of data periods which can be stored between vertical sync pulses depends on the length of the data period and the tolerances of the video cassette recorder. In order to closely approximate a format which is similar to the NTSC format and to be compatible with a video cassette recorder, each data period approximates one TV line. There are 256 TV lines in a standard 512-line system. Each data period and horizontal synchronization period should approximate the standard TV timing to insure that the recorder can synchronize to the waveform.

According to the invention, each data period is 64 microseconds and comprises 256 bits or 32 bytes of information as illustrated in Figure 2 followed by a 1.25 microsecond horizontal synchronization pulse. In order to obtain the highest data storage rate and the maximum volume of storage of digital information, the invention employs a recovery system configuration which resynchronizes itself from the actual data being recovered. In particular, the invention contemplates that the data recovery system for detecting the digital data at each data period will use data transitions from 1 to 0 or 0 to 1 to resynchronize the data recovery clock which times the detection of the digital information. As a result, it is necessary to force data transitions to provide a basis for which the data clock may be resynchronized.

In order to force such data transitions, the following rule applies to the signal format: an all zero (or all one) byte code is not permitted and every other byte is inverted or multiplied by a minus 1. Therefore, as shown in Figure 2, odd bytes within each data period are multiplied by a plus one (+1) and even bytes are multiplied by a minus one (−1).

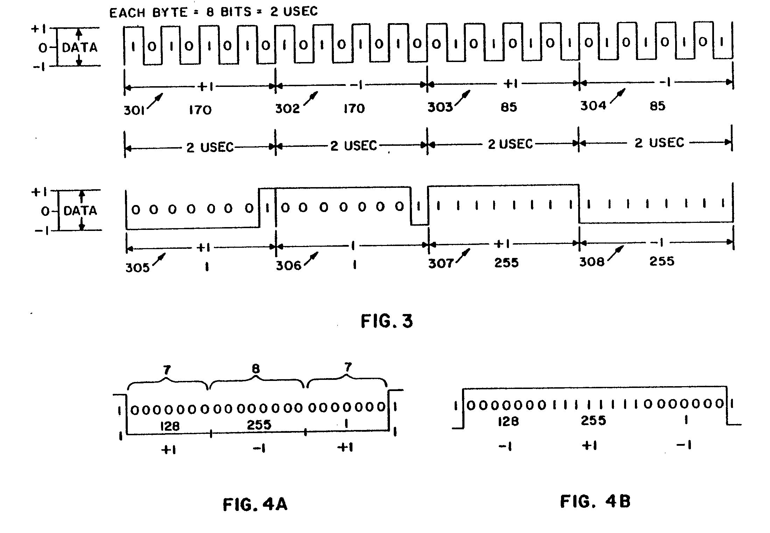

Figures 3 and 4 illustrate various 8-bit byte configurations. Reference character 301 refers to an odd byte of digital value eoual to 170 and reference character 302 refers to an even byte of digital value equal to 170. As is apparent, even byte 302 is inverted or multiplied by minus one (−1) thereby being the opposite of odd byte 301. Similarly, reference characters 303 and 304 refer to odd and even bytes having a digital value equal to 85; reference characters 305 and 306 refer to odd and even bytes having a digital value equal to 1; and reference characters 307 and 308 refer to odd and even bytes having a digital value equal to 255. Because the value zero is not permitted for a byte, it is readily apparent from figures 4a and 4b that the maximum number of contiguous bits of information having the same voltage level value is 22 bits. In particular, as shown in Figure 4a if an odd byte of digital value equal to 128 is followed by an even byte of digital value equal to 255 which is then followed by an odd byte of digital value equal to 1, the last seven bits of the first odd byte, all eight bits of the even byte and the first seven bits of the last odd byte all have a zero value resulting in 22 contiguous bits of the same value. Similarly, as illustrated in Figure 4b, if a first even byte has a digital value equal to 128 and the next odd byte has a digital value equal to 255 and the last odd byte has a digital value equal to 1, 22 contiguous bits having the same voltage level value will result. Therefore, by not allowing a zero value byte and by multiplying every other byte by a minus one (−1), at least one data transition for every 22 bits of information is guaranteed.

This means that the data clock will be resynchronized by a transition at least every 22 bits. As long as the data clock can remain in synchronization with the actual data rate for 22 bits, no data loss will result. This is because the timing between the data clock and the actual data will never be out of synchronization.

There are various reason why the reading rate and the writing (actual data) rate will differ. First of all, most video cassette recorders use phase-locked loops to control reading and writing head speeds. As a result, the instantaneous reading and writing speed may vary and the instantaneous writing speed can be different from the instantaneous reading speed. Furthermore, the data pulses which are actually stored are not square pulses as illustrated but usually have steep slopes. These steep slopes, in addition to the FM modulation detection, result in variations in determining the edges of the pulses representing the digital data resulting in variations in the recovered pulse widths.

In addition to resynchronizing the recovery system clock with data transitions, the signal format also contemplates a resynchronization pulse 101 before the beginning of each data period to reset and clear the counter used in recapturing the data. In the signal format, resync pulse 101 is part of the horizontal synchronization pulses 102. Horizontal sync pulse 102 is provided as part of the signal format so that the format is compatible with the video cassette recorder. Preferably, horizontal sync pulse 102 is 1.25 microseconds in length the 0.25 microsecond resync pulse 101 at the end thereof.

Referring to the field organization illustrated in Figure 1, the data periods between vertical sync pulses can be considered to define a field of two sections A and B. For error correction reasons which will be explained below, section B is the same data as section A. Therefore, sections A and B can be referred to as a single period of digital data wherein the first half of the digital data is the same as the last half of digital data. In order to be compatible with the video cassette recorder circuitry and, particularly, its clamping circuits, the average value of data over a vertical period (16 milliseconds) should be approximately constant to prevent the recorder AC-couple circuits from going in to a limiting condition. The limiting condition is unacceptable for data recovery because the recorder clamps recover to slowly for the data rates which are contemplated by this invention. Since the data in section A is equal to the data in section B, a constant average value can always be guaranteed by multiplying section A by plus one (+1) and multiplying section B by minus one (−1) or inverting section B.

There are other minor modifications which may be required to permit data storage and retrieval by using a particular video cassette recorder. For example, in most recorders, the automatic gain control and pre-emphasis circuits may not operate properly and should be disconnected.

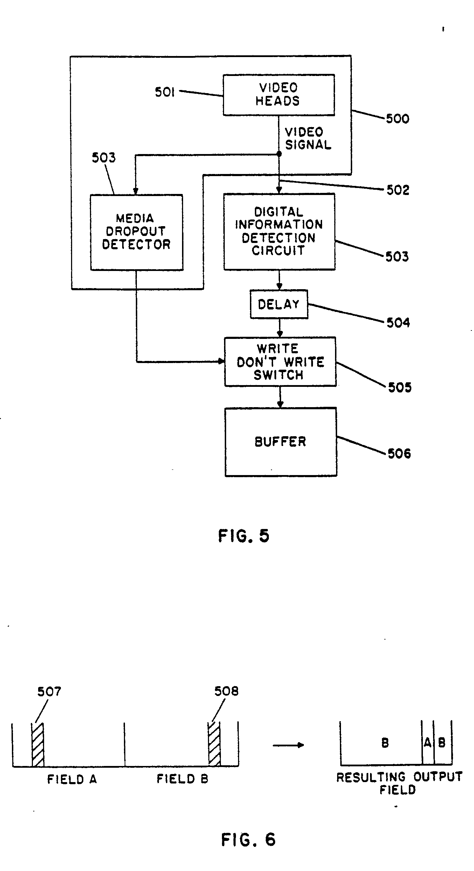

Figures 5 and 6 illustrate in block diagram form the error correction apparatus according to the invention. Video cassette recorder 500 includes video heads 501 which detect the signal recorded on the video cassette tape. The video signal is then provided as an output 502 from recorder 500 in the signal format as illustrated in Figure 1. Included within recorder 500 is a media dropout detector 503. Such detectors are well known in the art and are used to detect data transfer problems which occur between the tape and the video heads when the recorder is in the playback mode. Such data transfer problems may be the result of impurities in the video tape media, damaged media or dust or other foreign matter between the media and the head. The output signal provided by output 502 is applied to circuit 503 for detecting the digital data encoded in each of the data periods in section A and section B. The detected data is delayed by delay 504 and passes through a write/don't write switch 505 before being stored in buffer 506. Buffer 506 is configured to hold one section of digital data so that it is first; loaded with section A. However, buffer 506 is not loaded during identified periods of media-dropout as detector 503 enables switch 504 to prevent writing. Section B is then written over section A in buffer 506 except during identified periods of media dropout. The result is a significant decrease in the error rate of the recaptured data.

As shown in Figure 6, section A may suffer from media dropout 507 and section B may suffer from media dropout 508. The result is that section A would be stored in buffer 506 except for the data occurring during media dropout 507 in which case no data would be stored in buffer 506 at that equivalent address location. Subsequently, section B would be written, over section A as stored in buffer 506. Since section B does not have a media dropout at the same equivalent location to section A (and the likelihood of such is statistically very remote), section B will overwrite the data stored in buffer 506 including the missing data due to media dropout 507. However, when it is time to write the data corresponding to media dropout 508 in buffer 506, switch 504 will be enabled to prevent the writing of such data. The resulting section output from buffer 506 would be complete and would be provided by section B except for the identified dropouts occuring in section B (i.e. dropout 508) which have been previously stored in buffer 505 during the writing of section A.

## Claims

1. A method of storing information on a video tape using a video recorder by providing an input signal (Fig. 1) to the recorder for recording onto the tape, the input signal representing the information, said method comprising:
    providing to the recorder as part of the input signal (Fig. 1) a series of first vertical synchronization pulses (V1);
    providing to the recorder as part of the input signal (Fig. 1) data encoded in "A" data periods between each of the successive first vertical synchronization pulses (V1), each said data period having "B" bytes of data, wherein A and B are positive integers; and
    providing to the recorder as part of the input signal (Fig. 1) a resynchronization pulse (101) before the beginning of each said data period;
    characterized in that:
    said method is applied to the storage of digital information in a digitally represented signal format (Fig. 1) on a video cassette tape using a video cassette recorder; and
    the step of providing data encoded in the A data periods comprises providing said data as a digitally encoded signal in which the average value of the magnitude of said digitally encoded signal, between each of the successive first vertical synchronization pulses (V1), is substantially constant (Fig. 3).

2. A method according to Claim 1 characterized in that the first A/2 data periods include digital data bits equal and opposite in signal magnitude to the digital data bits in the last A/2 data periods (Fig. 6) between each of the successive first vertical synchronization pulses (V1).

3. A method according to Claim 1 or Claim 2 characterized by the steps of providing to the recorder as part of the input signal (Fig. 1) a second vertical synchronization pulse (V2) between each first vertical synchronization pulse (V1) and its associated succeeding first data period; and providing to the recorder as part of the input signal a horizontal synchronization pulse (102) at the end of each of said A data periods.

4. A method according to any one of Claims 1 to 3 characterized in that A equals 256 and B equals 32.

5. A method according to any one of Claims 1 to 4 characterized in that the digital data bits in every other byte are inverted (Figures 2 and 3).

6. A method according to any one of Claims 1 to 5 characterized in that the period between resynchronization pulses (101) is substantially 64 microseconds and wherein each resynchronization pulse (101) has a width substantially equal to or greater than 0.25 microseconds (Fig. 1).

7. A method of recovering information stored using the method according to claim 1, from a video tape using a video player by detecting an output signal from the player as the player reads the tape, the output signal representing the information, said method comprising:
    detecting as part of the output signal a series of first vertical synchronization pulses (V1);
    detecting as part of the output signal data encoded in "A" data periods between each of the successive first vertical synchronization pulses (V1), each said data period having "B" bytes of data, wherein A and B are positive integers;

detecting as part of the output signal a resynchronization pulse (101) before the beginning of each said data period;

characterized in that:

said method is applied to the recovery of digital information stored in a digitally represented signal format (Fig. 1) on a video cassette tape using a video cassette recorder;

identifying media drop-outs and parts (507, 508) of the output signal which are the result of said media drop-outs;

writing, except during said signal parts resulting from identified media drop-outs, the digital data encoded in the first A/2 data periods into a buffer (506); and

writing, except during said signal parts resulting from identified media drop-outs, the digital data encoded in the last A/2 data periods into the buffer (506) at the same buffer locations as correspond to the data written in from the first A/2 data periods.

8. A method according to Claim 7 characterized by the step of synchronizing the encoded data detection to transitions in the encoded data (Figs. 1 and 4).

## Patentansprüche

1. Verfahren zum Abspeichern von Information auf einem Video-Band, unter Verwendung eines Video-Recorders, durch Zuführen eines Eingangssignales zu dem Recorder zum Zwecke der Aufnahme auf das Band, wobei das Eingangssignal die Information wiedergibt und das Verfahren folgendes umfaßt:

Zuführen zu dem Recorder einer Reihe erster Vertikal-Synchronisationsimpulse (V1) als Teil des Eingangssignales (Fig. 1),

Zuführen zu dem Recorder von in "A" Datenperioden zwischen den einzelnen aufeinanderfolgenden ersten Vertikal-Synchronisationsimpulsen (V1) codierten Daten als Teil des Eingangssignales, wobei jede der Datenperioden "B" Datenbytes enthält und A und B positive ganze Zahlen sind; sowie

Zuführen zu dem Recorder von einem Resynchronisationsimpuls (101) vor dem Beginn jeder Datenperiode als Teil des Eingangssignales (Fig. 1), dadurch gekennzeichnet, daß

das Verfahren zur Speicherung digitaler Information in einem digital dargestellten Signalformat (Fig. 1) auf einem Videocassettenband unter Verwendung eines Videocassettenrecorders angewendet wird; und daß der Schritt des Zuführens von in A Datenperioden codierten Daten umfaßt: daß die Daten als digital codiertes Signal zugeführt werden, bei dem der Mittelwert der Amplitude des digital codierten Signales zwischen den einzelnen aufeinanderfolgenden ersten Vertikal-Synchronisationsimpulsen (V1) im wesentlichen konstant ist (Fig. 3).

2. Verfahren nach Anspruch 1, dadurch gekennzeichnet, daß zwischen den einzelnen aufeinanderfolgenden ersten Vertikal-Synchronisationsimpulsen (V1) die jeweils ersten A/2-Datenperioden digitale Datenbits enthalten, die die gleiche Signalamplitude und entgegengesetztes Vorzeichen aufweisen wie die digitalen Datenbits in den jeweils letzten A/2-Datenperioden (Fig. 6).

3. Verfahren nach Anspruch 1 oder 2, gekennzeichnet durch die Schritte des Zuführens zu dem Recorder von jeweils einem zweiten Vertikal-Synchronisationsimpuls (V2) zwischen jedem ersten Vertikal-Synchronisationsimpuls (V1) und dessen zugeordneter nachfolgender erster Datenperiode als Teil des Eingangssignales (Fig. 1) für den Recorder, sowie des Zuführens zu dem Recorder eines Horizontal-Synchronisationsimpulses (102) am Ende jeder der A Datenperioden als Teil des Eingangssignales.

4. Verfahren nach einem der Ansprüche 1 bis 3, dadurch gekennzeichnet, daß A gleich 256 und B gleich 32 ist.

5. Verfahren nach einem der Ansprüche 1 bis 4, dadurch gekennzeichnet, daß die digitalen Datenbits in jedem zweiten Byte invertiert sind (Fig. 2 und 3).

6. Verfahren nach einem der Ansprüche 1 bis 5, dadurch gekennzeichnet, daß die Periode zwischen Resynchronisationsimpulsen (101) im wesentlichen 64 Microsekunden beträgt und daß jeder Resynchronisationsimpuls (101) eine Dauer aufweist, die im wesentlichen gleich oder größer als 0,25 Microsekunden (Fig. 1) ist.

7. Verfahren zur Rückgewinnung von nach dem Verfahren gemäß Anspruch 1 gespeicherter Information von einem Video-Band unter Verwendung eines Videowiedergabegerätes, bei dem, während das Band von dem Wiedergabegerät gelesen wird, ein Ausgangssignal des Wiedergabegerätes erkannt wird und das Ausgangssignal die Information wiedergibt; wobei das Verfahren folgendes umfaßt:

Erkennen einer Reihe erster Vertikal-Synchronisationsimpulse (V1) als Teil des Ausgangssignales;

Erkennen von in "A" Datenperioden codierten Daten zwischen den einzelnen aufeinanderfolgenden ersten Vertikal-Synchronisationsimpulsen (V1) als Teil des Ausgangssignales, wobei jede der Datenperioden "B" Datenbytes enthält und A und B positive ganze Zahlen sind; sowie

Erkennen eines Resynchronisationsimpulses (101) vor dem Beginn jeder Datenperiode als Teil des Ausgangssignales; dadurch gekennzeichnet, daß

das Verfahren zur Rückgewinnung von in einem digital dargestellten Signalformat (Fig. 1) auf einem Videocassettenband unter Verwendung eines Videocassettenrecorders gespeicherter digitaler Information angewendet wird; daß

Datenträger-Aussetzfehler und Teile (507, 508) des Ausgangssignales, die die Folge von Datenträger-Aussetzfehlern sind, erkannt werden; daß

mit Ausnahme von Signalteilen, die aus erkannten Datenträger-Aussetzfehlern stammen, die in den ersten A/2 Datenperioden codierten digitalen Daten in einen puffer (506) eingeschrieben werden; und daß

mit Ausnahme von Signalteilen, die aus erkannten Datenträger-Aussetzfehlern stammen, die in der zweiten A/2 Datenperiode codierten digitalen Daten in dem Puffer (506) in dieselben Pufferplätze eingeschrieben werden, die den Daten zugeordnet sind, die aus den ersten A/2 Datenperioden eingeschrieben worden sind.

8. Verfahren nach Anspruch 1, gekennzeichnet durch den Schritt der Synchronisation des Erkennens (Detektierens) der codierten Daten mit Pegelübergängen in den codierten Daten (Fig. 1 und 4).

**Revendications**

1. Un procédé de stockage d'informations sur une bande magnétoscopique au moyen d'un magnétoscope en envoyant un signal d'entrée (figure 1) au magnétoscope pour qu'il enregistre sur la bande, le signal d'entrée qui représente les informations, lebprésente les informations, ledit procédé comprenant:

l'envoi au magnétoscope, comme partie du signal d'entrée (figure 1), d'une série de premières impulsions de synchronisation verticale (VI);

l'envoi au magnétoscope comme partie du signal d'entrée (figure 1), de données codées pendant des périodes "A" de données entre chacune des premières impulsions successives de synchronisation verticale (V1), chacune desdites périodes de données contenant "B" octets de données, A et B étant des nombres entiers positifs; et,

l'envoi au magnétoscope comme partie du signal d'entrée (figure 1) d'une impulsion de resynchronisation (101) avant le début de chacune desdites périodes de données;

caractérisé en ce que:

ledit procédé est appliqué au stockage d'informations numériques sous le format d'un signal à représentation numérique (figure 1) sur une bande de vidéocassette au moyen d'un enregistreur de vidéocassette; et en ce que

l'étape d'envoi de données codées pendant les périodes A de données comprend l'envoi desdites données sous forme de signal à codage numérique dans lequel la valeur moyenne de la grandeur dudit signal à codage numérique, entre chacune des premières impulsions de synchronisation verticale successives (V1), est sensiblement constante (figure 3).

2. Un procédé selon la revendication 1, caractérisé en ce que les premières périodes A/2 de données comportent des bits de données numériques dont la grandeur de signal est égale et opposée aux bits de données numériques dans les dernières périodes A/2 de données (figure 6) entre chacune des premières impulsions de synchronisation verticale successives (V1).

3. Un procédé selon la revendication 1 ou la revendication 2, caractérisé par les étapes d'envoi au magnétoscope, comme partie du signal d'entrée (figure 1), d'une seconde impulsion de synchronisation verticale (V2) entre chacune des premières impulsions de synchronisation verticale (V1) et sa première période de données associée suivante; et d'envoi au magnétoscope, comme partie du signal d'entrée, d'une impulsion de synchronisation horizontale (102) à la fin de chacune desdites périodes A de données.

4. Un procédé selon l'une quelconque des revendications 1 à 3, caractérisé en ce que A est égal à 256 et B est égal à 32.

5. Un procédé selon l'une quelconque des revendications 1 à 4, caractérisé en ce que, dans un octet sur deux, les bits de données numériques sont inversés (figures 2 et 3).

6. Un procédé selon l'une quelconque des revendications 1 à 5, caractérisé en ce que la période entre les impulsions de resynchronisation (101) dure sensiblement 64 microsecondes et en ce que la largeur de chaque impulsion de resynchronisation (101) est sensiblement égale à, ou supérieure à 0,25 microsecondes (figure 1).

7. Un procédé de reprise d'informations stockées au moyen du procédé selon la revendication 1 sur une bande magnétoscopique au moyen d'un lecteur de vidéo en détectant un signal de sortie émanant du lecteur lorsque le lecteur lit la bande, le signal de sortie représentant les informations, ledit procédé comprenant:

la détection comme partie du signal de sortie d'une série de premières impulsions de synchronisation verticale (V1);

la détection comme partie du signal de sortie des données codées pendant des périodes "A" de données entre chacune des premières impulsions successives de synchronisation verticale (V1), chacune desdites périodes de données contenant "B" octets de données, A et B étant des nombres entiers positifs;

la détection comme partie du signal de sortie d'une impulsion de resynchronisation (101) précédant le début de chacune desdites périodes de données;

caractérisé en ce que:

ledit procédé est appliqué à la reprise d'informations numériques stockées sous un format de signal à représentation numérique (figure 1) sur une bande de vidéocassette au moyen d'un enregistreur de vidéocassette;

l'identification de pertes d'informations sur le support et des parties (507, 508) du signal de sortie qui sont le résultat desdites pertes d'informations sur le support.

l'écriture dans une mémoire tampon (506), sauf pendant lesdites parties du signal qui sont le résultat de pertes identifiées d'informations sur le support, des données numériques codées pendant les premières périodes A/2 de données; et

l'écriture dans la mémoire tampon (506), sauf pendant lesdites parties du signal qui sont le résultat de pertes identifiées d'informations sur le support, des données numériques codées pendant les dernières périodes A/2 de données, aux mêmes emplacements de mémoire tampon qui correspondent aux données écrites, provenant des premières périodes A/2 de données.

8. Un procédé selon la revendication 7, caractérisé par l'étape de synchronisation de la détection de données codées sur des transitions dans les données codées (figures 1 et 4).

SIGNAL FORMAT (NOT SCALE)

FIG. 1

EACH DATA PERIOD · 256 BITS · 32 BYTES · 64 USEC

FIG. 2

EP 0 159 111 B1

FIG. 3

FIG. 4A

FIG. 4B

2

FIG. 5

FIG. 6